# EUROPEAN PATENT APPLICATION

(11) **EP 1 813 788 A1**
(43) Date of publication of application: **01.08.2007**
(21) Application number: 06126772.0
(22) Date of filing: 21.12.2006
(51) Int. Cl.: F01P 11/10, A01F 15/14, A01B 71/08

(54) **Agricultural machine**

(30) Priority: 31.01.2006 US 344448
(71) Applicant: Deere & Company, Moline, IL 61265-8098 (US)
(72) Inventor: Roth, Darin, Batavia, IA 52533 (US); Rotole, David, Bloomfield, IA 52537 (US); Lang, Eric, Donnellson, IA 52625 (US); Parker, Paul, Ottumwa, IA 52501 (US)
(74) Representative: Löser, Iris

(57) **Abstract**

A cleaning system (10) is provided for use with an operating fluid cooling system of an agricultural machine. The cleaning system (10) includes an air plenum (14) adapted to be attached to the cooling system (10). Fans (24) provided for use in the cooling system (10) exhaust air through the air plenum (14) which has air outlets (42) which direct air to individual mechanisms (46) of the machine to blow away dust and debris from the mechanisms (46). Thus continuous cleaning of mechanisms (46) during machine operation is enabled without the need for separate blowers, fans, or compressors and the expense and complexity associated therewith.

## Description

The present invention relates generally to agricultural machines. More particularly, the present invention relates to agricultural machines such as balers having a fluid cooling system used for cooling an operating fluid of the machine. Specifically, the present invention relates to means for using the cooling system as a source of air for use by a cleaning system.

Agricultural machines such as balers and particularly large square or parallelepiped balers are susceptible to accumulations of dust and crop debris that can at times, foul the various mechanisms of the baler. For example, such balers typically employ a knotter system designed to tie off the bales they produce. These systems typically reside on the top of the machine and are susceptible to considerable crop and debris buildup. The crop and debris buildup on the knotters can impede function and cause a lower tie repeatability and poor knotter performance. Increased wear of knotter components and rust are also side effects. It has been known to use a variety of techniques to automatically keep the knotter area clean, but these techniques frequently add a considerable cost to the baler. Such systems typically comprise the addition of a blower system which includes a driver, motor, fan, and tubing to direct air flow across the knotters. Some manufacturers employ a hydraulically driven blower, fan, and tube system. Other manufacturers utilize electrically driven fan systems. The addition of such devices dedicated solely to the purpose of cleaning the knotter system adds significant cost to the baler.

Accordingly, there is a clear need in the art for a cleaning system that utilizes existing machine systems to provide air for cleaning the knotter system and other mechanisms without the cost associated with a dedicated fan or blower system.

It is therefore an object of the present invention to overcome this need.

This object is met according to the invention by the teaching of claim 1, while features developing the solution in an advantageous way are set forth in the further claims.

The foregoing and other objects of the invention together with the advantages thereof over the known art which will become apparent from the detailed specification which follows are attained by an improved agricultural machine having a system for cooling operating fluid of the machine by way of at least one fan, the machine having one or more mechanisms wherein it is desired to keep the mechanisms free of dust and debris, the improvement comprising: an air plenum for directing air exhausted from the at least one fan of the cooling system to at least one of the one or more mechanisms at a velocity to blow away dust and debris from the mechanism.

Other objects of the invention are attained by cleaning system for removing dust and debris from mechanisms of an agricultural machine, the machine having an operating fluid cooling system including at least one fan, the cleaning system comprising: an air plenum for directing air exhausted from the at least one fan of the cooling system to the mechanisms at a velocity to blow away dust and debris from the mechanism.

Still other objects of the invention are attained by an air plenum adapted for use with an operating fluid cooling system of an agricultural machine, the cooling system having at least one fan, the machine further having one or more mechanisms wherein it is desired to keep the mechanisms free of dust and debris, the air plenum comprising an air inlet, and at least one air outlet wherein the air plenum is secured to the cooling system and air exhausted from the at least one fan is directed to the one or more mechanisms to blow away dust and debris from the one or more mechanisms.

The invention overcomes the problem of cleaning debris from various machine mechanisms such as the knotting mechanism on a baler by utilizing air flow from a separate onboard cooling system. Cooling systems are often present e.g. for removing heat from hydraulic oil used to drive other functions on a baler. The present invention leverages the pre-existing air flow from the fan of such a cooling system. The airflow is directed to machine mechanisms such as the knotters on a baler to remove foreign debris therefrom. With this concept there is very little overall cost impact to the machine.

In order to utilize airflow off of an existing cooling system, the manifold that gathers the air and directs it to the mechanism to be cleaned ideally should be designed to balance internal static pressure and exit air velocity. These two parameters have an impact on the efficiency of the cooling system. The result is a design of a plenum that does not significantly reduce cooling efficiency, yet provides enough air volume and velocity to adequately clean the various baler mechanisms.

In general, a cleaning system is provided for use with an operating fluid cooling system of an agricultural machine. The cleaning system includes an air plenum adapted to be attached to the cooling system. Fans provided for use in the cooling system exhaust air through the air plenum which has air outlets which direct air to individual mechanisms of the baler to blow away dust and debris from the mechanisms. Thus continuous cleaning of mechanisms during machine operation is enabled without the need for separate blowers, fans, or compressors and the expense and complexity associated therewith.

The invention might provide a means for cleaning various mechanisms of an agricultural machine. Such means may utilize existing machine components to provide a source of air for the cleaning system. Such system may add no moving parts and is inexpensive to produce. It may be provided such a means that is lightweight and is easily removable for cleaning or repair.

To acquaint persons skilled in the art most closely related to the present invention, one preferred embodiment of the invention that illustrates the best mode now contemplated for putting the invention into practice is described herein by and with reference to, the annexed drawings that form a part of the specification. The exemplary embodiment is described in detail without attempting to show all of the various forms and modifications in which the invention might be embodied. As such, the embodiment shown and described herein is illustrative, and as will become apparent to those skilled in the art, can be modified in numerous ways within the spirit and scope of the invention--the invention being measured by the appended claims and not by the details of the specification.

For a complete understanding of the objects, techniques, and structure of the invention reference should be made to the following detailed description and accompanying drawings, wherein:
- Fig. 1: is an elevational view, partially in section, of an integrated oil cooler and cleaning system according to the invention;
- Fig. 2: is a perspective view of the integrated oil cooler and cleaning system according to the invention;

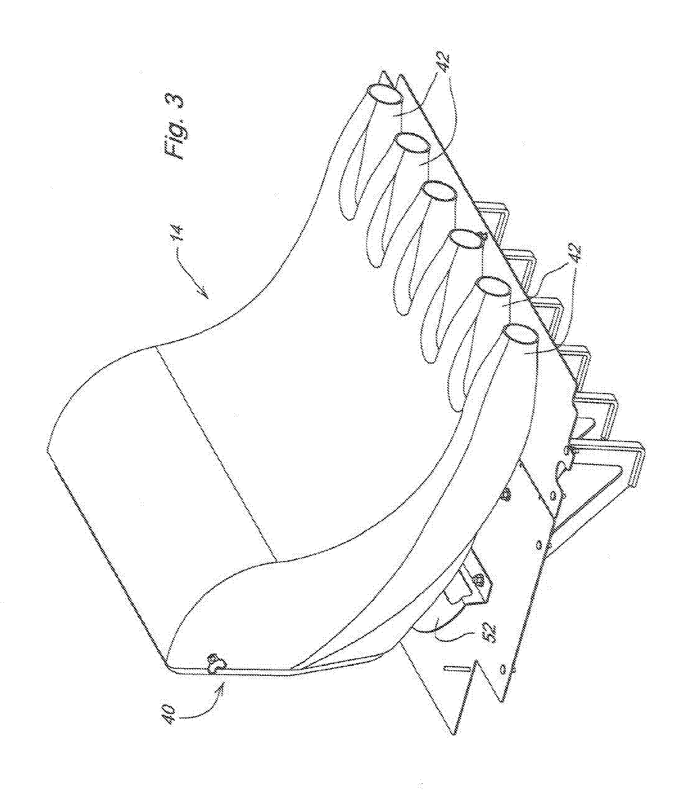

- Fig. 3: is rear perspective view of the air plenum according to the invention; and,

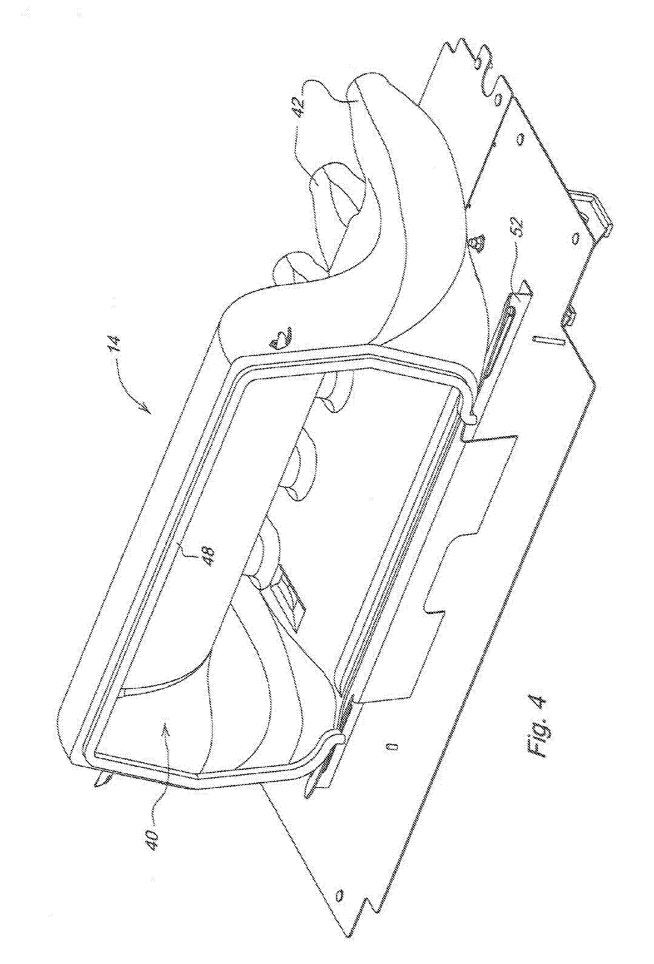

- Fig. 4: is a front perspective view of the air plenum according to the invention; and,
- Fig. 5: is a schematic view of an alternative embodiment according to the invention.

With reference now to the drawings it can be seen that one exemplary embodiment of an integrated oil cooler and cleaning system for an agricultural machine such as a baler is designated generally by the numeral 10. In the embodiment shown the system 10 generally includes an oil cooler assembly 12 and an air plenum 14 both mounted at the top of a baler adjacent to a knotting mechanism 16. The oil cooler assembly 12 is a conventional oil cooler assembly provided to cool hydraulic fluid used for operating the baler. Accordingly, the oil cooler assembly 12 includes a heat exchanger 18 through which hydraulic fluid flows. One or more fans 24 are provided adjacent to the heat exchanger 18 for drawing air through the heat exchanger 18. The fans 24 are disposed in a fan shroud 26 comprising a lower wall 28, an upper wall 30, a pair of opposed side walls 32 and an end wall 34 to which the fans 24 are mounted. The end wall 34 includes one or more apertures 36 to allow air exhausted from the fans 24 to flow through the end wall 34. The fan shroud 26 is mounted to the heat exchanger 18 by way of mounting flanges 38 that are affixed to both the heat exchanger 18 and the fan shroud 26. Accordingly, when the fans 24 are in operation air is necessarily drawn through the heat exchanger 18 and exhausted through the apertures 36 in the shroud end wall 34.

As shown in the drawings the air plenum 14 includes an air inlet 40, a plurality of air outlets 42 and a substantially enclosed air chamber 44 therebetween. As shown the air inlet 40 is adapted to matingly engage the oil cooler assembly 12 and, as such, the opening of the air inlet portion 40 is substantially the same size in its periphery as the fan shroud 26 defined by the walls 28, 30, and 32. The air chamber 44 has a first portion 44A, a second portion 44B and a third portion 44C of decreasing cross-sectional area, i.e. the volumetric capacity of the first portion 44A of the air chamber 44 is greater than that of the second portion 44B, which is greater than that of the third portion 44C. More particularly, the first portion 44A is at the air inlet 40, and due to the fact that the air inlet 40 is adapted to mate with the fan shroud 26 has the greatest cross-sectional area, while the third portion 44C is at the air outlets 42 and thus has a significantly smaller cross-sectional area. The second portion 44B has a varying cross-sectional area as a transition between the first portion 44A and the third portion 44C.

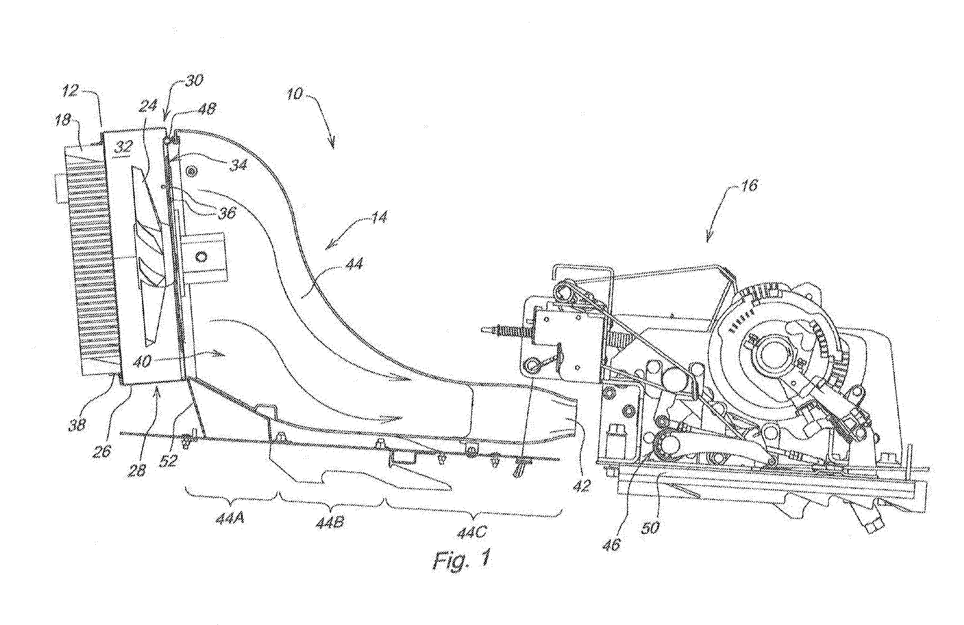

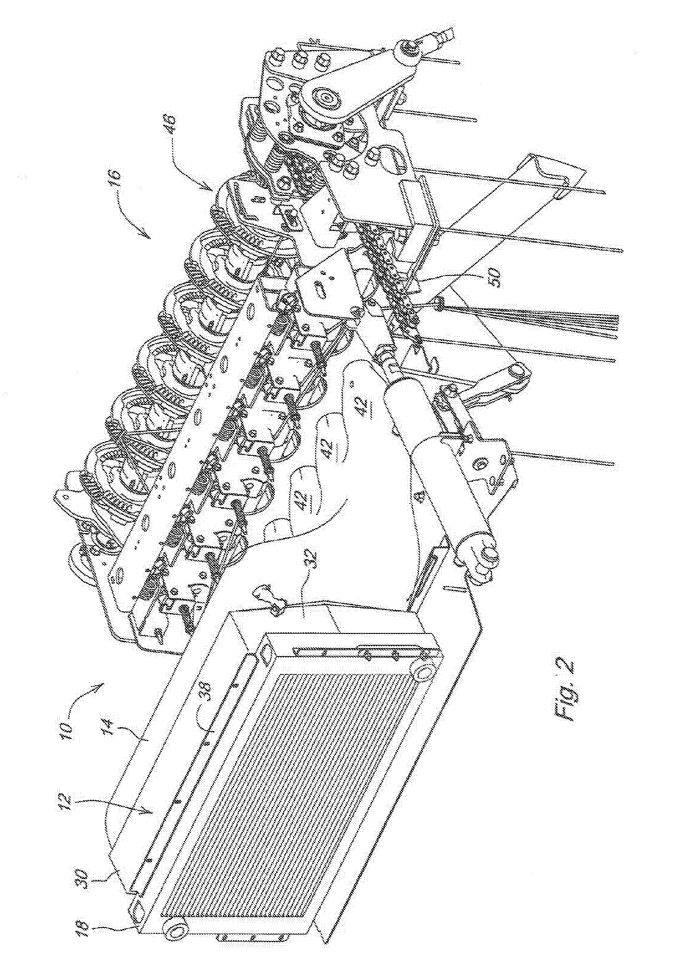

In the embodiment shown in Figs. 1 and 2 the air plenum 14 is adapted to be mounted to the oil cooler assembly 12 between the oil cooler assembly 12 and the knotting mechanism 16 such that each air outlet 42 is disposed adjacent to an individual knotter 46 of the knotting mechanism 16. More particularly, the air inlet 40 of the plenum 14 is secured to the fan shroud 26 by appropriate means and may include a flexible seal 48 for sealing the interface between the shroud 26 and the plenum 14. The plenum 14 may further be supported and secured to the baler structure 50 by means of a mounting bracket 52. In operation air is drawn through the heat exchanger 18 by the fans 24 and directed through the air chamber 44 and exhausted through the individual air outlets 42. The velocity of air exiting the plenum 14 is sufficient to blow away dust and debris that would otherwise accumulate at the knotter 46 during operation of the baler. Because of the shape of the plenum 14, the internal static pressure and exit air velocity are balanced so as not to effect the performance of the cooling system, while providing adequate air velocity at the knotters 46 to keep them free of debris. However, while in most instances it is desirable to have a balanced system, the concept of the invention is not limited to such balanced systems. It might be desirable in some situations to sacrifice cooling capacity for increased airflow for cleaning and vice versa. In any event it should now be apparent that the unique air plenum 14 added to the existing cooling system 12 of the baler enables the continuous cleaning of the knotting and other baler mechanisms during baler operation without the need for separate blowers, fans, or compressors and the expense and complexity associated therewith.

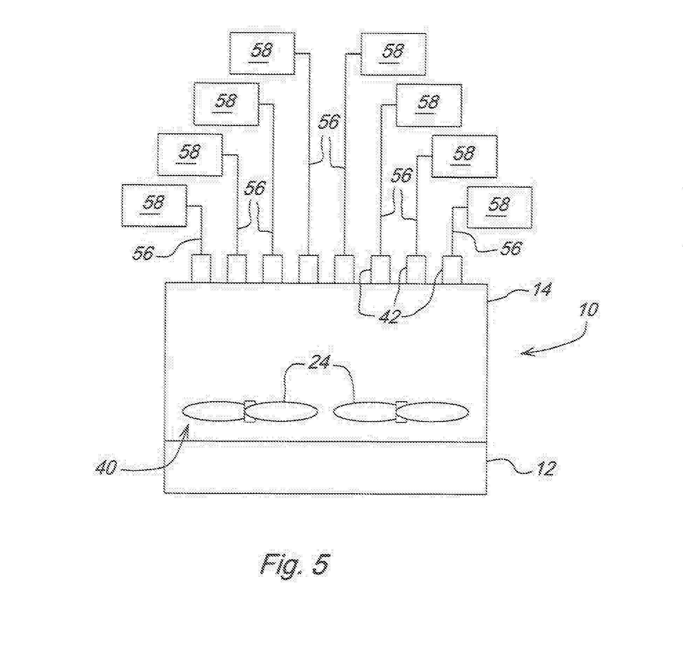

With reference to Fig. 5 it will be seen that another embodiment of the system 10 is illustrated schematically wherein an alternative version of the plenum 14 is shown. In this embodiment the plenum 14 is enlarged to include additional air outlets 42 to which are affixed hoses or ducts 56. It is contemplated that the hoses or ducts 56 could be routed to other mechanisms 58 or areas of the baler where it is desired to blow away dust and crop debris to prevent heat build-up and/or wear of baler mechanisms and, as such, more or less air outlets 42 could be included as needed. It will also be seen that the illustrated air plenum 14 serves to house the fans 24 of the cooling system 12. Specifically, the plenum 14 is extended and/or enlarged so that the fans 24 are disposed within the opening 40 of the plenum 14 so as to eliminate the need for a separate fan shroud, thereby reducing the overall number of parts required for the system.

Thus it can be seen that the objects of the invention have been satisfied by the structure presented above. While in accordance with the patent statutes, only the best mode and preferred embodiment of the invention has been presented and described in detail, it is not intended to be exhaustive or to limit the invention to the precise form disclosed. Obvious modifications or variations are possible in light of the above teachings. The embodiment was chosen and described to provide the best illustration of the principles of the invention and its practical application to thereby enable one of ordinary skill in the art to utilize the invention in various embodiments and with various modifications as are suited to the particular use contemplated. All such modifications and variations are within the scope of the invention as determined by the appended claims when interpreted in accordance with the breadth to which they are fairly and legally entitled.

## Claims

1. An agricultural machine having a system (10) for cooling operating fluid of the machine by way of at least one fan (24), the machine having one or more mechanisms (16) wherein it is desired to keep the mechanisms (16) free of dust and debris, **characterized by** an air plenum (14) for directing air exhausted from the at least one fan (24) of the cooling system (10) to at least one of the one or more mechanisms (16) at a velocity to blow away dust and debris from the mechanism (16).

2. The agricultural machine according to claim 1, **characterized in that** the air plenum (14) includes an air inlet (40) and at least one air outlet (42).

3. The agricultural machine according to claim 1 or 2, **characterized in that** each air outlet (42) is fitted with a hose or duct (56) for directing air to one of the one or more mechanisms (16).

4. The agricultural machine according to one or several of the previous claims, **characterized in that** the plenum (14) is of a varying cross-sectional area, wherein the air inlet (40), preferably has the greatest cross-sectional area, while the at least one air outlet (42) has a significantly smaller cross-sectional area.

5. The agricultural machine according to one or several of the previous claims, **characterized in that** the air inlet (40) of the plenum (14) is secured to the cooling system (10).

6. The agricultural machine according to one or several of the previous claims, **characterized in that** air is drawn though the system (10) for cooling operating fluid by the at least one fan (24) and exhausted through the at least one air outlet (42).

7. The agricultural machine according to one or several of the previous claims, **characterized in that** the at least one air outlet (42) comprises a plurality of individual air outlets (42) corresponding to individual mechanisms (46).

8. The agricultural machine according to one or several of the previous claims being a baler, preferably a large square or parallelepiped baler.

9. The agricultural machine according to claim 8, **characterized in that** the at least one or several mechanisms is/are a individual knotter(s) (46) on a knotting mechanism (10) of the baler.
